# EUROPÄISCHE PATENTSCHRIFT

(11) **EP 3 910 295 B1**
(45) Veröffentlichungstag und Bekanntmachung des Hinweises auf die Patenterteilung: **11.10.2023**
(21) Anmeldenummer: 21172168.3
(22) Anmeldetag: 04.05.2021
(51) Int. Cl.: G01F 1/66, G01F 1/667, G01N 29/02, G01N 29/024, G01N 29/34

(54) **MESSEINRICHTUNG ZUR ERMITTLUNG EINER FLUIDGRÖSSE**
MEASURING DEVICE FOR DETERMINING A FLUID VARIABLE
DISPOSITIF DE MESURE POUR DÉTERMINER UNE VARIABLE DE FLUIDE

(30) Priorität: 12.05.2020 DE 102020002834
(43) Veröffentlichungstag der Anmeldung: 17.11.2021
(73) Patentinhaber: Diehl Metering GmbH, 91522 Ansbach (DE)
(72) Erfinder: Sonnenberg, Hans-Michael, 91564 Neuendettelsau (DE); Mayle, Michael, 91522 Ansbach (DE)
(74) Vertreter: Diehl Patentabteilung

(56) Entgegenhaltungen:
- EP-A1- 1 173 733
- WO-A1-2017/125612
- DE-A1- 10 235 034
- DE-A1-102017 006 173
- DE-C2- 4 213 170
- DE-U1-202015 106 040
- US-A1- 2016 320 219

## Beschreibung

Die Erfindung betrifft eine Messeinrichtung, insbesondere einen Durchflusszähler, zur Ermittlung einer ein Fluid und/oder eine Fluidströmung des Fluids betreffenden Fluidgröße, insbesondere eines Durchflussvolumens, mit einer Steuereinrichtung, einem Messrohr und einem ersten und einem zweiten in Längsrichtung des Messrohrs voneinander beabstandet an dem Messrohr angeordneten Ultraschallwandler, wobei eine Innenfläche des Messrohrs einen Strömungskanal für das Fluid seitlich begrenzt, wobei der Strömungskanal zwischen dem ersten und zweiten Ultraschallwandler in Längsrichtung des Messrohrs gekrümmt ist.

Eine Möglichkeit einen Durchfluss durch ein Messrohr zu messen, sind Ultraschallzähler. Bei diesen wird ein Ultraschallwandler genutzt, um eine Ultraschallwelle in das durch das Messrohr strömende Fluid einzukoppeln, wobei diese auf einem geraden Weg oder nach mehreren Reflektionen an Wänden oder speziellen Reflektorelementen zu einem zweiten Ultraschallwandler geführt wird. Aus der Laufzeit der Ultraschallwelle zwischen den Ultraschallwandlern beziehungsweise aus einem Laufzeitunterschied bei einer Vertauschung von Sender und Empfänger kann eine Durchflussgeschwindigkeit für das Medium und somit bei bekanntem Rohrdurchmesser ein Durchflussvolumen bestimmt werden.

Eine übliche Bauform von Durchflusszählern sind Messkapselzähler, bei denen ein Gehäuse mit einem Fluidzufluss und einem Fluidabfluss dauerhaft in eine Leitung eingesetzt wird, in das wiederum eine Messkapsel eingesetzt wird, die die zur Messung erforderliche Mechanik und/oder Elektronik umfasst. Dies hat den Vorteil, dass bei einem Zählerwechsel, beispielsweise aufgrund einer nicht länger sichergestellten Kalibrierung des Zählers, nur die Messkapsel ausgetauscht werden muss. Entsprechende Messkapseln sind relativ kleinbauend und haben typischerweise eine zylinderförmige Grundfläche, da sie in das Gehäuse eingeschraubt werden. Um einen Einfluss des einströmenden Strömungsprofils zu reduzieren, sind relativ lange Strömungswege innerhalb der Messkapsel wünschenswert, weshalb die Strömungsführung innerhalb der Messkapsel typischerweise entlang gekrümmter Strömungskanäle erfolgt.

Eine Möglichkeit in einem gekrümmten Strömungskanal eine Durchflussmessung mithilfe von Ultraschallwandlern zu implementieren, ist beispielsweise in der Druckschrift DE 42 131 70 C2 offenbart. Die dort offenbarte Ausgestaltung erfordert jedoch sowohl einflussals auch ausflussseitig ein scharfes Umlenken des Fluids, was die Messung stören kann. Zudem ist erforderlich, dass die Ultraschallwandler in direktem Fluidkontakt sind, weshalb eine aufwendige Isolation der Ultraschallwandler erforderlich ist, wenn die gezeigte Anordnung beispielsweise als Wasserzähler genutzt werden soll. Da zudem die Ultraschallwelle mehrfach an runden Wänden reflektiert wird, ist eine sehr genaue Abstimmung der Anordnung der Ultraschallwandler und der Rohrgeometrie aufeinander erforderlich. Dies kann eine aufwendige Neukonzeption des Zählers selbst bei kleineren Änderungen, wie beispielsweise der Änderungen eines Rohrdurchmessers, erfordern.

Die Druckschrift WO 2017/125612 A1 offenbart eine Vorrichtung zur Bestimmung von Eigenschaften eines Mediums, bei der ein akustischer Wellenleiter das zu messende Medium mit einer konkaven Fläche kontaktiert. An der von dem Medium abgewandten Seite des Wellenleiters sind voneinander beabstandet zwei Sender beziehungsweise Empfänger angeordnet, die dazu eingerichtet sind, Lamb- beziehungsweise Rayleigh-Wellen in den Wellenleiter einzukoppeln. Der Wellenleiter kann Teil eines Rohres sein.

Ein Sensorapparat, der einen Wellenleiter und mehrere Sende- beziehungsweise Empfangselemente umfasst, die an dem Wellenleiter angebracht sind, ist aus der Druckschrift US 2016/320219 A1 bekannt. Der Wellenleiter kann an der Außenwand eines Messrohrs angebracht oder durch dieses selbst gebildet sein.

Der Erfindung liegt somit die Aufgabe zugrunde, eine Möglichkeit zur Ultraschallmessung von Fluidgrößen, insbesondere eines Durchflusses, in gekrümmten Strömungskanälen anzugeben, die demgegenüber einfacher implementierbar ist und insbesondere eine flexiblere Ausgestaltung der Rohrgeometrie ermöglicht.

Die Aufgabe wird erfindungsgemäß durch eine Messeinrichtung der eingangs genannten Art gelöst, wobei die Ultraschallwandler jeweils mit einem Wellenleiter schwingungsgekoppelt sind, wobei eine Kontaktfläche des jeweiligen Wellenleiters einen Abschnitt der Innenfläche des Messrohrs bildet, wobei die Steuereinrichtung dazu eingerichtet ist, den ersten und/oder den zweiten Ultraschallwandler derart anzusteuern, dass er eine geführte Welle derart anregt, dass sie sich in dem jeweiligen Wellenleiter parallel zu der Kontaktfläche ausbreitet und hierbei eine Kompressionswelle im Fluid anregt, die über das Fluid zu dem jeweils anderen der Ultraschallwandler geführt wird, um diesen zu Schwingungen anzuregen, wobei die Steuereinrichtung dazu eingerichtet ist, die Schwingung des jeweils anderen der Ultraschallwandler betreffende Messdaten zu erfassen und die Fluidgröße in Abhängigkeit dieser Messdaten zu ermitteln, wobei der jeweilige Wellenleiter in Längsrichtung des Messrohrs gekrümmt ist, womit ein gekrümmter Ausbreitungspfad der geführten Welle resultiert.

Erfindungsgemäß wird vorgeschlagen, statt einer unmittelbaren Einkopplung von Druckwellen in das Fluid durch die Ultraschallwandler eine indirekte Einkopplung zu nutzen, bei der zunächst eine geführte Welle im Wellenleiter angeregt wird, die sich innerhalb des Wellenleiters parallel zur Strömungsrichtung ausbreiten kann. Im Rahmen der Entwicklung der Erfindung wurde erkannt, dass auch für gekrümmte Wellenleiter Schwindungsmoden resultieren, die sich lokal weitgehend wie Lamb- beziehungsweise Rayleigh-Wellen in einer ebenen Platte verhalten. Das Ausbreitungsverhalten dieser geführten Wellen kann als Mischung zwischen einer longitudinalen Welle und einer transversalen Welle beschrieben werden, während Druckwellen reine Longitudinalwellen sind. Aufgrund des Transversalanteils der geführten Welle schwingen Abschnitte der Kontaktfläche senkrecht zur Kontaktfläche, wodurch die Druckwellen im Fluid angeregt werden. Die Kontaktfläche kann das Fluid unmittelbar kontaktieren. Die Abstrahlung erfolgt hierbei, wie bei einer Nutzung von Lamb-Wellen und einer ebenen Platte zur Anregung eines Fluids, unter dem Rayleigh-Winkel, dessen Sinus von dem Verhältnis der Ultraschallgeschwindigkeit im Fluid zu der Phasengeschwindigkeit in dem Wellenleiter abhängt. Direkt oder nach einer Reflektion an einer anderen Seitenwand des Messrohrs trifft die resultierende Druckwelle anschließend auf jenen Wellenleiter, mit dem der andere der Ultraschallwandler gekoppelt ist, wodurch in diesem wiederum eine geführte Welle angeregt wird, die zu diesem Ultraschallwandler läuft und diesen in Schwingung versetzt.

Aufgrund des beschriebenen Anregungsprinzips erfolgt eine Anregung der Druckwellen im Wesentlichen über jenen Teil der Kontaktfläche, innerhalb dem sich die geführte Welle ausbreitet. Ebenso kann ein Empfang der Druckwelle über einen relativ langen Abschnitt der Kontaktfläche in Längsrichtung erfolgen. Gegenüber einer direkten Anregung der Druckwelle beziehungsweise einem direkten Empfang der Druckwelle resultiert somit bei dem erfindungsgemäßen Vorgehen effektiv eine wesentlich größere Sende- und Empfangsfläche, womit selbst stärkere Änderungen der Rohrgeometrie bzw. Störungen im Medium z.B. Luftblasen, typischerweise nicht dazu führen, dass die Ultraschallwelle nicht länger empfangen werden kann. Somit erleichtert das vorgeschlagene Vorgehen die Auslegung der Messeinrichtung erheblich. Es ist zudem möglich einen direkten Kontakt der Ultraschallwandler mit dem Fluid zu vermeiden, womit auch Messungen an leitfähigen Flüssigkeiten ohne eine aufwendige Isolation des Ultraschallwandlers gegenüber dem Fluid möglich sind.

Das Messrohr kann insbesondere aus mehreren gewinkelt zueinander stehenden Seitenwänden gebildet sein und beispielsweise einen rechteckigen Querschnitt aufweisen. Auch können diese Seitenwände, die keine akustische Aufgabe haben, beliebige Konturen, wie z.B. eine Rillengeometrie, aufweisen. Die Längsrichtung ist jene Richtung, in die sich der Strömungskanal erstreckt, und ist somit bei Fluiddurchfluss typischerweise auch die Hauptströmungsrichtung. Da der Strömungskanal gekrümmt ist, handelt es sich bei der Längsrichtung um eine Richtung in einem lokalen Koordinatensystem, das heißt, die Längsrichtung variiert entlang des Strömungskanals und ist insbesondere stets parallel zur Innenfläche des Messrohrs. Die Kontaktfläche kann insbesondere in eine Querrichtung des Messrohrs eben sein und/oder der Wellenleiter kann eine konstante Dicke in Richtung senkrecht zur Längsrichtung und zur Querrichtung aufweisen.

Wie bereits erwähnt, verhält sich die angeregte geführte Welle ähnlich wie eine Lamb-Welle. Insbesondere resultieren auch bei gekrümmten Wellenleitern bei hinreichend niedriger Anregungsfrequenz nur genau zwei lambwellenartige Schwingungsmoden, nämlich eine symmetrische und eine antisymmetrische Schwingungsmode. Da sich die Phasengeschwindigkeiten dieser Schwingungsmoden und somit auch die Wellenlängen und Rayleigh-Winkel unterscheiden, kann es zweckmäßig sein, eine modenselektive Anregung durchzuführen. Ansätze hierfür werden später noch erläutert.

Als Fluideigenschaft können beispielsweise eine Strömungsgeschwindigkeit beziehungsweise in Abhängigkeit von dieser anhand des bekannten Strömungsquerschnitts ein Durchflussvolumen, eine Dichte, eine Temperatur, eine Schallgeschwindigkeit, eine Viskosität und/oder eine Wärmekapazität des Fluids oder auch ein Druck im Strömungskanal ermittelt werden. Diese Größen können im einfachsten Fall durch Laufzeitmessungen für die Laufzeiten der Ultraschallwelle zwischen dem ersten und zweiten Ultraschallwandler ermittelt werden. In einer nicht erfindungsgemäßen Alternative wäre es möglich, auch eine Laufzeit für den direkten Ausbreitungspfad vom ersten zum zweiten Ultraschallwandler innerhalb des Wellenleiters zu berücksichtigen, wenn beide Ultraschallwandler am gleichen Wellenleiter angeordnet sind.

Ergänzend oder alternativ kann eine, insbesondere frequenzabhängige, Dämpfung der Ultraschallwelle oder das Dispersionsverhalten bei einer Übertragung zwischen den Ultraschallwandlern, beispielsweise anhand der Form einer Einhüllenden, ausgewertet werden. Ansätze zur Ermittlung der genannten Größen durch Ultraschallmessungen bei einer direkten Anregung der Druckwelle durch den Ultraschallwandler beziehungsweise bei einer geraden Messrohrgeometrie sind prinzipiell bekannt und können auch in der erfindungsgemäßen Messeinrichtung unmittelbar verwendet werden. Daher soll keine detaillierte Darstellung der diversen Ermittlungsverfahren erfolgen.

Der Wellenleiter kann sich über die gesamte Breite der Innenfläche einer von mehreren gewinkelt zueinander stehenden Seitenwänden des Messrohrs erstrecken. Die Krümmung des Wellenleiters beziehungsweise des Strömungskanals weist, zumindest lokal, vorzugsweise jedoch über den gesamten Längsabschnitt zwischen den Ultraschallwandlern, einen Biegeradius auf, der kleiner ist als das Hundertfache, insbesondere kleiner als das Zehnfache, des Rohrdurchmessers des Messrohrs. Hierbei kann als Rohrdurchmesser der geringste Durchmesser eines Rohrs senkrecht zur Längsrichtung beziehungsweise zur Strömungsrichtung angenommen werden.

Die Kontaktfläche kann zumindest in einem Längsabschnitt des jeweiligen Wellenleiters eine Krümmung in Längsrichtung mit konstantem Krümmungsradius aufweisen. Die Länge dieses Längsabschnitts ist insbesondere wenigstens 10 %, vorzugsweise wenigstens 20 % oder 40 %, der Länge des Wellenleiters beziehungsweise des Abstands des ersten und des zweiten Ultraschallwandlers in Strömungsrichtung entlang des Strömungskanals. Der Wellenleiter kann auch im Wesentlichen auf seiner gesamten Länge mit konstantem Krümmungsradius gekrümmt sein, beispielsweise auf wenigstens 80 %, 90% oder 95% seiner Länge. Bei Nutzung eines konstanten Krümmungsradius kann die Führung der geführten Welle besonders gut an eine Messgeometrie von Messkapselzählern oder anderen kompakt bauenden Zählern angepasst werden.

Die Innenfläche des Messrohrs kann in einem sich zwischen dem ersten und zweiten Ultraschallwandler erstreckenden Längsabschnitt zwei parallele Innenflächenabschnitte aufweisen, wobei die Kontaktfläche des jeweiligen Wellenleiters einen dieser Innenflächenabschnitte oder einen Teilabschnitt eines dieser Innenflächenabschnitte bildet. Die beiden Innenflächenabschnitte sind insbesondere zwei von mehreren gewinkelt zueinander stehenden Innenflächenabschnitten. Beispielsweise können die Innenflächenabschnitte eine im Querschnitt rechteckige Innenflächen bilden. Die Innenflächen die gewinkelt zu dem Wellenleiter, bzw. zur parallel zum Wellenleiter stehenden Reflektionsflächen, stehen, können in ihrer Kontur gewölbte, gerillte oder durchbrochene Flächen aufweisen, welche die Fluidlenkung und der Fluidkonditionierung dienen können. Werden unterschiedliche Wellenleiter für die Ultraschallwandler verwendet, könnten deren Kontaktflächen insbesondere Teil des gleichen Innenflächenabschnitts sein. Der gegenüberliegende, parallele Innenflächenabschnitt kann als Reflektor für die Druckwelle dienen. Es ist auch möglich, dass dieser gegenüberliegende Innenflächenabschnitt durch einen weiteren Wellenleiter gebildet ist, in dem die einlaufende Druckwelle zunächst wieder eine geführte Welle anregt, durch die eine weitere Druckwelle abgestrahlt wird.

Wie im Folgenden noch erläutert werden wird, kann jedoch auch dann, wenn die Ultraschallwandler in einer nicht erfindungsgemäßen Alternative am gleichen Wellenleiter beziehungsweise in einer erfindungsgemäßen Ausgestaltung an unterschiedlichen Wellenleitern, deren Kontaktflächen Teilflächen des gleichen Innenflächenabschnitts sind, auf eine Reflektion verzichtet werden und die Ultraschallwelle kann direkt durch das Fluid zum gleichen Innenflächenabschnitt zurückgeführt werden.

Wenn beide Ultraschallwandler in einer nicht erfindungsgemäßen Alternative den gleichen Wellenleiter kontaktieren, kann der Wellenleiter derart geformt sein und die Steuereinrichtung dazu eingerichtet sein, den ersten und/oder zweiten Ultraschallwandler derart zur Anregung der geführten Welle anzusteuern, dass die durch den jeweiligen Ultraschallwandler angeregte geführte Welle eine Kompressionswelle anregt, die geradlinig durch das Fluid zurück zu dem gleichen Wellenleiter geführt wird.

In einer erfindungsgemäßen Ausgestaltung kann die Innenfläche des Messrohrs zumindest in dem oder einem sich zwischen dem ersten und zweiten Ultraschallwandler erstreckenden Längsabschnitt mehrere gewinkelt zueinander stehende Innenflächenabschnitte aufweisen, wobei beiden Ultraschallwandler unterschiedliche Wellenleiter kontaktieren, deren Kontaktflächen Teilflächen des gleichen Innenflächenabschnitts sind, wobei der Innenflächenabschnitt derart geformt ist und die Steuereinrichtung dazu eingerichtet ist, den ersten und/oder zweiten Ultraschallwandler derart zur Anregung der geführten Welle anzusteuern, dass die durch den jeweiligen Ultraschallwandler angeregte geführte Welle eine Kompressionswelle anregt, die geradlinig durch das Fluid zurück zu dem gleichen Innenflächenabschnitt geführt wird.

Durch Wahl eines ausreichend großen Rohrdurchmessers und einer ausreichend starken Krümmung resultiert zumindest für einige Abstrahlwinkel der Druckwelle von der Kontaktfläche und zumindest für einige Bereiche, in denen eine solche Abstrahlung erfolgt, ein unmittelbarer Pfad durch das Fluid zurück zur gleichen Kontaktfläche beziehungsweise zur Kontaktfläche des anderen Wellenleiters. Der Abstrahlwinkel der Druckwelle kann jedoch durch geeignete Wahl der genutzten Schwingungsmode, also insbesondere durch Wahl der symmetrischen oder der antisymmetrischen Schwingungsmode, und der Anregungsfrequenz über einen gewissen Bereich eingestellt werden, so dass für viele Rohrgeometrien eine solche direkte Ausbreitung möglich ist. Dies kann einerseits die Auslegung der Messeinrichtung vereinfachen und andererseits unter Umständen Störungen der Messung, beispielsweise durch Ablagerungen an einer reflektierenden Wand, vermeiden.

Der jeweilige Wellenleiter kann die Form einer in Längsrichtung gekrümmten Platte aufweisen und/oder aus Metall bestehen. Im Rahmen der Erfindung wurde festgestellt, dass bei einer Nutzung von Kunststoff zur Führung einer geführten Welle entlang einer gekrümmten Bahn typischerweise eine relativ starke Dämpfung der Welle resultiert. Daher ist die Nutzung eines metallischen Wellenleiters besonders vorteilhaft. Dieser kann beispielsweise als dünner Blechstreifen ausgebildet sein. Der Wellenleiter kann eine zur Kontaktfläche gegenüberliegende parallele Außenfläche aufweisen und der Abstand dieser Flächen kann über die gesamte Fläche des Wellenleiters konstant sein. Insbesondere kann dieser Abstand, also die Dicke des Wellenleiters, wenigstens um den Faktor 5 oder 10 oder 50 kleiner sein als die Ausdehnung des Wellenleiters in Längsrichtung und insbesondere auch als in die Breitenrichtung.

Der jeweilige Wellenleiter kann durch einen Metallstreifen gebildet sein, der, insbesondere formschlüssig, an einem aus einem anderen Material, insbesondere aus Kunststoff, gebildeten Tragabschnitt des Messrohrs gehaltert ist. Insbesondere muss somit nicht das gesamte Messrohr aus dem gleichen Material gebildet sein wie der Wellenleiter. Beispielsweise kann zunächst ein Messrohr aus einem anderen Material, beispielsweise aus Kunststoff, hergestellt werden, das eine Halterung für den beziehungsweise die Wellenleiter aufweist. Beispielsweise kann der Wellenleiter in Längsrichtungen in eine entsprechende Ausnehmung eingeschoben werden, die ihn ortsfest bezüglich des Messrohrs haltert.

Die Außenfläche des Wellenleiters kann freiliegen. Alternativ kann, beispielsweise um ein stabileres Messrohr bereitzustellen, eine verbesserte Abdichtung des Messrohrs zu erreichen oder Ähnliches, auch an der fluidabgewandten Seite des Wellenleiters Material angeordnet sein, wobei dabei vorzugsweise Material mit kleinerer akustischer Impedanz als das zu vermessende Fluid verwendet wird. Insbesondere können an der Außenfläche des Wellenleiters Materialien mit geringer Dichte, beispielsweise geschäumte Materialien, angeordnet sein.

Der erste und/oder der zweite Ultraschallwandler können jeweils dazu eingerichtet sein, in wenigstens zwei in Längsrichtung voneinander beabstandeten Anregungsbereichen des jeweiligen Wellenleiters eine jeweilige Teilwelle anzuregen, wobei sich die Teilwellen zu der geführten Welle überlagern. Dieses Vorgehen kann insbesondere dazu dienen, eine Modenselektivität zu erreichen, indem die Abstände der Anregungsbereiche und eine Anregungsfrequenz so gewählt werden, dass für eine bestimmte Schwingungsmode der geführten Welle aufgrund ihrer Wellenlänge eine destruktive Interferenz resultiert. Beispielsweise kann die Anregung in beiden Anregungsbereichen gleichphasig beziehungsweise mit gleicher Polarität erfolgen und der Abstand der Mitten der Anregungsbereich kann der halben Wellenlänge der nicht gewünschten Schwingungsmode entsprechen. Es kann auch möglich sein, die Anregungsbereiche mit einem bestimmten Phasenversatz oder mit einer bestimmten Zeitverzögerung anzuregen beziehungsweise dort Schwingungen mit umgekehrter Parallelität anzuregen, um eine destruktive Interferenz für eine bestimmte Schwingungsmode zu realisieren. Durch entsprechende Verarbeitung der Empfangssignale, also beispielsweise durch Addieren oder Subtrahieren der Empfangssignale aus beabstandeten Anregungsbereichen oder durch ein phasenverschobenes Addieren, kann auch empfangsseitig eine Modenselektivität erreicht werden.

Die Anregungen der Teilwellen in den Anregungsbereichen kann insbesondere durch separate Schwingelemente, beispielsweise durch separate piezoelektrische Schwingelemente, erfolgen. Beispielsweise können in Längsrichtung beabstandet voneinander zwei stabförmige Piezoelemente mit der, insbesondere dort lokal flachen, Oberfläche des Wellenleiters gekoppelt werden, um die Anregung in verschiedenen Anregungsbereichen zu ermöglichen. Verschiedene Ansätze zur Anregung in voneinander beabstandeten Anregungsbereichen, um eine Modenselektivität zu erreichen, sind beispielsweise aus der Druckschrift DE 10 2017 006 173 A1 bekannt. Dort werden diese Ansätze zwar zur Anregung einer Seitenwand eines geraden Messrohrs genutzt. Es wurde jedoch erkannt, dass diese Ansätze auch auf einen gekrümmten Wellenleiter übertragbar sind.

In einer alternativen Ausgestaltung können der erste und/oder zweite Ultraschallwandler mit einer jeweiligen Stirnfläche des jeweiligen Wellenleiters schwingungsgekoppelt sein, die in einem Winkel von wenigstens 60° oder von wenigstens 80° zu der jeweiligen Kontaktfläche steht. Insbesondere kann die jeweilige Stirnfläche im Wesentlichen senkrecht auf der Kontaktfläche stehen, wobei von einem Winkel von 90° beispielsweise toleranzbedingt um weniger als 5° oder weniger als 1° abgewichen werden kann. Insbesondere kann die Stirnfläche an einem Ende des Wellenleiters in Längsrichtung, insbesondere an dem von dem jeweils anderem Ultraschallwandler abgewandten Ende, angeordnet sein.

Im Rahmen von Versuchen wurde festgestellt, dass bei einer solchen stirnseitigen Anregung eine überraschend gute Modenreinheit über einen relativ breiten Frequenzbereich von Anregungsfrequenzen erreicht werden kann. Werden Frequenzen genutzt, bei denen nur genau eine symmetrische und genau eine antisymmetrische Schwingungsmode angeregt werden kann, so kann durch Auswahl der Polarisierung eines als Ultraschallwandler genutzten piezoelektrischen Elements die anzuregende Schwingungsmode gewählt werden. Wird ein in Dickenrichtung, also senkrecht zur Kontaktfläche, polarisiertes piezoelektrisches Element genutzt, werden nahezu ausschließlich symmetrische Schwingungsmoden des Wellenleiters angeregt. Eine Polarisierung des piezoelektrischen Elements, die zu einem Scheren führt, regt hingegen primär antisymmetrische Schwingungsmoden an. Somit kann mit sehr geringem Aufwand eine weitgehende Modenreinheit erreicht werden.

Da ein direkter Fluidkontakt des Ultraschallwandlers typischerweise vermieden werden soll, kann eine Abdichtung beispielsweise erfolgen, indem eine Dichtung an der Kontaktfläche des Wellenleiters angreift. Hierbei wurde im Rahmen der Entwicklung erkannt, dass hierdurch eine geführte Welle im Wellenleiter nur wenig gedämpft wird.

In der erfindungsgemäßen Messeinrichtung sollen Messdaten ausgewertet werden, die eine durch die geführte Welle angeregte Druckwelle im Fluid betreffen. Wären in einer nicht erfindungsgemäßen Alternative beide Ultraschallwandler mit dem gleichen Wellenleiter schwingungsgekoppelt, so empfängt der empfangende Ultraschallwandler typischerweise neben einem Messsignal, das aufgrund der Druckwelle im Fluid resultiert, zusätzlich ein überlagertes Messsignal, das aus der direkten Führung der geführten Welle entlang dem Wellenleiter resultiert. Durch entsprechende Wahl der Messgeometrie kann in dieser nicht erfindungsgemäßen Alternative ein ausreichender Zeitabstand zwischen diesen Signalen erreicht werden, so dass die Messsignale für beide Ausbreitungspfade, beispielsweise die Laufzeit für beide Pfade, separat ausgewertet werden können. Dies kann beispielsweise dazu dienen, zwei unabhängige Fluidgrößen zu ermitteln beziehungsweise weitere Parameter der Messeinrichtung zu überwachen.

Es kann gewünscht sein, diese zusätzlichen überlagerten Messsignale zu vermeiden, beispielsweise wenn für eine bestimmte Geometrie kein ausreichender Laufzeitunterschied sichergestellt werden kann. Dies kann erfindungsgemäß erreicht werden, weil die Ultraschallwandler mit separaten Wellenleitern schwingungsgekoppelt sind, wobei die beiden Wellenleiter voneinander beabstandet sind. Beispielsweise kann ein Abschnitt der Innenfläche des Messrohrs zwischen den Wellenleitern durch einen Kunststoff oder ein anderes Material gebildet werden, das die geführte Welle absorbiert oder reflektiert.

Alternativ wäre es in einer nicht erfindungsgemäßen Alternative auch möglich, dass beide Ultraschallwandler mit dem gleichen Wellenleiter schwingungsgekoppelt sind, wobei an einer von der Kontaktfläche abgewandten Außenfläche des Wellenleiters in einem Teilabschnitt des oder eines sich zwischen dem ersten und dem zweiten Ultraschallwandler erstreckenden Längsabschnitts ein Dämpfelement angeordnet ist. Insbesondere erfolgt die Bedämpfung in dieser nicht erfindungsgemäßen Alternative im Wesentlichen mittig zwischen den Ultraschallwandlern in einem relativ schmalen Bereich, um eine Führung der geführten Welle über eine relativ große Länge und somit eine Anregung der Druckwelle über eine relativ große Länge zu erreichen. Außerhalb des Bereichs, in dem das Dämpfelement angebracht ist, kann die Außenfläche freiliegen oder durch ein anderes Material kontaktiert werden, das die geführte Welle allenfalls gering dämpft.

Neben der erfindungsgemäßen Messeinrichtung betrifft die Erfindung einen Messkapselzähler, der ein Gehäuse mit einem einflussseitigen und einem ausflussseitigen Rohranschluss und einer Aufnahme für eine Messkapsel umfasst, wobei die erfindungsgemäße Messeinrichtung als Messkapsel in das Gehäuse eingesetzt, insbesondere eingeschraubt, ist. Wie bereits eingangs erläutert, ist es in Messkapseln für Messkapselzähler vorteilhaft, das Fluid zumindest abschnittsweise in einem gekrümmten Strömungskanal zu führen.

Um dennoch eine einfache Auslegung einer solchen Messkapsel und eine robuste Messung zu ermöglichen, kann sie gemäß der obig erläuterten Messeinrichtung ausgestaltet sein.

Weitere Vorteile und Einzelheiten der Erfindung ergeben sich aus den folgenden Ausführungsbeispielen sowie die zugehörigen Zeichnungen. Hierbei zeigen schematisch:
- Fig. 1: ein Ausführungsbeispiel einer nicht erfindungsgemäßen Messeinrichtung,
- Fig. 2: einen Schnitt entlang der Linie II - II in Fig. 1,
- Fig. 3: beispielhafte Messdaten, die durch die in Fig. 1 und Fig. 2 gezeigte Messeinrichtung erfasst werden können,
- Figuren 4 + 5: Detailansichten zur Ausgestaltung eines jeweiligen Ultraschallwandlers in Ausführungsbeispielen einer nicht erfindungsgemäßen Messeinrichtung,
- Figuren 6: ein Ausführungsbeispiel einer erfindungsgemäßen Messeinrichtung, und
- Figuren 7- 8: weitere Ausführungsbeispiele nicht erfindungsgemäßer Messeinrichtungen.

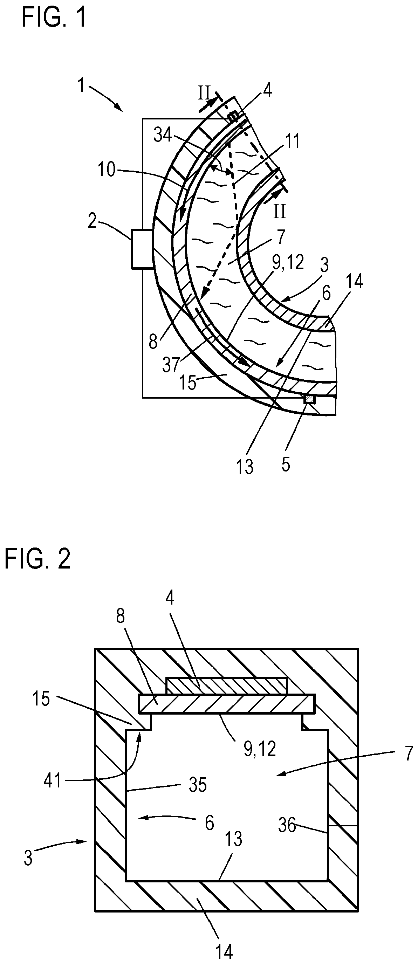

Fig. 1 zeigt eine geschnittene Ansicht einer nicht erfindungsgemäßen Messeinrichtung 1, im Beispiel eines Durchflusszählers, bei dem Fluid von einem Einfluss zu einem Ausfluss, beispielsweise im Bild von oben nach unten, durch ein Messrohr 3 geführt wird, das einen gekrümmten Strömungskanal 7 ausbildet. Die Messeinrichtung 1 umfasst eine Steuereinrichtung 2 sowie einen ersten und zweiten voneinander beabstandet an dem Messrohr 3 angeordneten Ultraschallwandler 4, 5. Die Ultraschallwandler 4, 5 sind beide mit einem Wellenleiter 8 schwingungsgekoppelt, der eine Kontaktfläche 9 aufweist, die einen Abschnitt der Innenfläche 6 des Messrohrs bildet.

Die Steuereinrichtung 2 ist dazu eingerichtet, den jeweiligen Ultraschallwandler 4, 5 derart anzusteuern, dass eine geführte Welle 10 derart angeregt wird, dass sie sich in dem Wellenleiter 8 parallel zur Kontaktfläche 9, also auf einem gekrümmten Ausbreitungspfad, ausbreitet. Da eine solche geführte Welle eine Mischform zwischen einer Longitudinal- und einer Transversalwelle ist, schwingt hierdurch auch der durch die Kontaktfläche 9 gebildete Innenflächenabschnitt 12 der Innenfläche 6, wodurch im gesamten Ausbreitungsbereich der geführten Welle 10 Druckwellen 11 in das Fluid abgestrahlt werden. In Fig. 1 ist hierbei beispielhaft der Ausbreitungspfad einer solchen Druckwelle 11 dargestellt. Die Abstrahlung erfolgt unter einem Rayleigh-Winkel 34.

Wie in Fig. 2 dargestellt ist, die den Schnitt entlang der Linie II - II in Fig. 1 darstellt, weist die Innenfläche 6 mehrere gewinkelt zueinander stehende Innenflächenabschnitte 12, 13, 35, 36 auf, womit eine im Wesentlichen rechteckige Form des Strömungskanals 7 resultiert. Der durch die Seitenwand 14 gebildete Innenflächenabschnitt 13 verläuft parallel zum Innenflächenabschnitt 12, der durch den Wellenleiter 9 gebildet wird und ist daher gut geeignet die Druckwelle 11 zu reflektieren, wie in Fig. 1 dargestellt ist, und sie zurück zum Wellenleiter 8 zu führen. Dadurch regt sie erneut eine geführte Welle 37 im Wellenleiter 9 an, die zum Schwingungswandler 5 läuft und diesen zu Schwingungen anregt, die wiederum durch die Steuereinrichtung 2 erfasst werden, um in Abhängigkeit dieser Messdaten die Fluidgröße zu bestimmen. Beispielsweise kann eine Laufzeit des durch den Ultraschallwandler 4 gesendeten Signals zum Ultraschallwandler 5 und umgekehrt gemessen werden und aus dem Laufzeitunterschied kann eine Strömungsgeschwindigkeit ermittelt werden. Alternativ könnte jedoch auch die durchschnittliche Laufzeit aus diesen Messungen bestimmt werden, um eine Fluideigenschaft zu ermitteln, eine Dämpfung, insbesondere eine frequenzabhängige Dämpfung, während der Führung der Welle zum jeweils anderen Ultraschallwandler könnte ermittelt werden oder Ähnliches.

Der Wellenleiter 8 und somit die Kontaktfläche 9 und insgesamt der Innenflächenabschnitt 12 weisen einen konstanten Krümmungsradius auf. Der Krümmungsradius der Seitenwand 14 ist ebenfalls konstant, jedoch kleiner als der Krümmungsradius des Wellenleiters 8. Durch diese Formgebung wird eine gleichmäßige Strömungsführung bei konstantem Strömungsquerschnitt erreicht.

Der Wellenleiter 8 ist als plattenförmiges Metallplättchen ausgeführt, das, wie in Fig. 2 erkennbar ist, formschlüssig durch einen Tragabschnitt 41 des Messrohrs 3, der aus einem anderen Material 15 besteht, gehaltert ist. Das Material 15 bildet beispielsweise auch die Seitenwand 14. Das andere Material 15 kann beispielsweise Kunststoff sein und sollte vorzugsweise eine geringe Schallimpedanz aufweisen. Im Rahmen der Herstellung kann der Wellenleiter 8 beispielsweise in das vorgefertigte Messrohr eingeschoben werden, so dass er sich, wie in Fig. 1 dargestellt ist, in Längsrichtung entlang dem Messrohr 3 erstreckt.

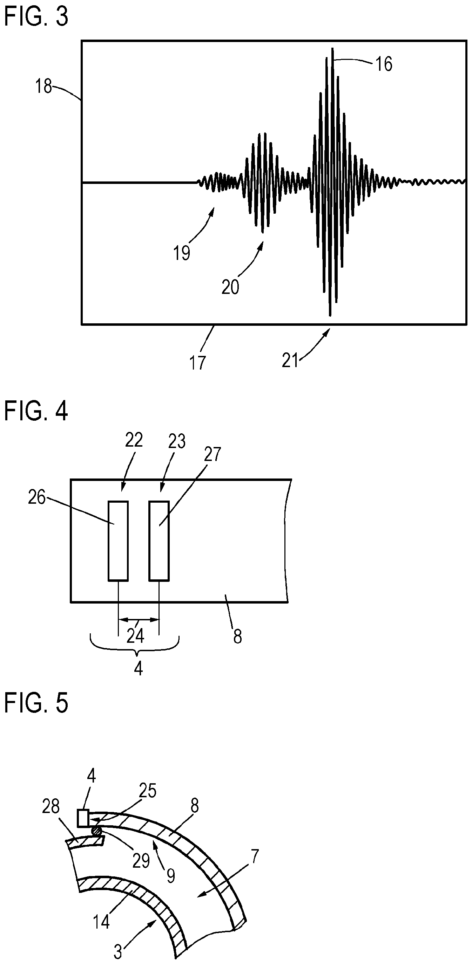

Fig. 3 zeigt beispielhafte Messdaten 16, wie sie mit der in Fig. 1 gezeigten Messeinrichtung 1 am Ultraschallwandler 5 erfasst werden, wenn durch den Ultraschallwandler 4 pulsförmig die geführte Welle 10 abgestrahlt wird. Hierbei ist auf der X-Achse 17 die Zeit und auf der Y-Achse 18 die Amplitude aufgetragen. In den Messdaten 16 resultieren, wenn keine weiteren Maßnahmen getroffen werden, mehrere empfangene Pulse 19, 20, 21.

Die Pulse 19, 20 resultieren hierbei daraus, dass die Abstrahlung der Druckwellen 11 die geführte Welle 10 nicht vollständig dämpft, so dass zumindest ein Teil der Energie der geführten Welle 10 direkt als geführte Welle 10 entlang dem Wellenleiter 8 von dem Ultraschallwandler 4 zu dem Ultraschallwandler 5 geführt wird. Hierbei wird in Fig. 3 angenommen, dass die geführte Welle 10 mit hinreichend niedriger Frequenz angeregt wird, dass nur zwei Schwingungsmoden angeregt werden können. Da für diese unterschiedliche Dispersionsrelationen vorliegen, resultieren auch unterschiedliche Laufzeiten zwischen dem Schwingungswandler 4, 5. Der Puls 19 resultiert aus einer symmetrischen Schwingungsmode und der Puls 20 aus einer antisymmetrischen Schwingungsmode. An der relativen Amplitude dieser Pulse ist bereits zu erkennen, dass eine Anregung der geführten Welle 10 derart erfolgte, dass die symmetrische Schwingungsmode weitgehend unterdrückt ist, wie später noch mit Bezug auf die Figuren 4 und 5 erläutert werden wird.

Der Puls 21 resultiert aus der Führung der Druckwelle 11 durch das Fluid. Durch eine geeignete Ausgestaltung der Messgeometrie kann erreicht werden, dass die in Fig. 3 gezeigten Pulse bei der Messung separiert werden können. In diesem Fall kann der durch das direkte Führen der geführten Welle durch den Wellenleiter 8 erzeugte Anteil des Messsignals beispielsweise ausgewertet werden, um weitere Informationen über das Fluid, beispielsweise über einen Druck im Strömungskanal, zu ermitteln. Ein hoher Druck im Strömungskanal kann beispielsweise dazu führen, dass durch eine geringfügige Verformung des Wellenleiters und die hieraus resultierenden Verspannungen die Dispersionsrelation des Wellenleiters verändert wird und sich somit die Laufzeiten für die Pulse 19, 20 ändern.

Fig. 4 zeigt eine Detailansicht für eine mögliche Ausgestaltung des Ultraschallwandlers 4. Hierbei weist der Ultraschallwandler 4 zwei in Längsrichtung beabstandete Anregungsbereiche 22, 23 auf, in denen er den Wellenleiter 8 anregt. Dies kann beispielsweise dadurch realisiert werden, dass zwei separate Schwingelemente 26, 27, beispielsweise piezoelektrische Schwingungswandler, in den Anregungsbereichen 22, 23 angeordnet werden. Erfolgt beispielsweise die Anregung in den Anregungsbereichen 22, 23 mit gleicher Polarität, resultiert eine destruktive Interferenz für alle Schwingungsmoden, für die bei der gegebenen Anregungsfrequenz der Abstand 24 ein ungeradzahliges Vielfaches der halben Wellenlänge ist.

Werden relativ niedrige Anregungsfrequenzen genutzt, bei denen nur genau zwei Schwingungsmoden angeregt werden können, kann durch geeignete Wahl des Abstands 24 und der Anregungsfrequenz für eine dieser Schwingungsmoden eine im Wesentlichen vollständig destruktive Interferenz resultieren, so dass die andere der Schwingungsmoden modenrein angeregt werden kann. Hierbei sind weitere Varianten dieses Vorgehens denkbar, beispielsweise eine Anregung in den Anregungsbereichen 22, 23 mit umgekehrter Polarität oder eine phasenverschobene beziehungsweise zeitverzögerte Anregung. Diese Ansätze können ebenfalls genutzt werden, um eine destruktive Interferenz für eine bestimmte Schwingungsmode herzustellen.

Fig. 5 zeigt eine weitere Möglichkeit, eine weitgehend modenreine Anregung mit sehr einfachen technischen Mitteln zu erreichen. Hierbei ist der Ultraschallwandler 4, der insbesondere durch ein einzelnes piezoelektrisches Schwingelement gebildet sein kann, an einer Stirnfläche 25 des Wellenleiters 8 angebracht. Um einen direkten Kontakt des Ultraschallwandlers 4 mit dem Fluid zu vermeiden, ist zwischen dem Wellenleiter 8 und einer weiteren Seitenwand 28 des Messrohrs 3 ein Dichtelement 29, beispielsweise ein Dichtring oder Ähnliches, angeordnet.

Es wurde erkannt, dass allein durch geeignete Wahl der Polarisierung eines als Ultraschallwandler 4 genutzten piezoelektrischen Elements bei der gezeigten stirnflächenseitigen Anordnung eine weitgehende Modenreinheit der Anregung erreicht werden kann. So werden durch ein in Dickenrichtung des piezoelektrischen Elements beziehungsweise des Wellenleiters 8 polarisiertes piezoelektrisches Element nahezu ausschließlich symmetrische Schwingungsmoden angeregt, während ein piezoelektrisches Element, das bei Spannungsbeaufschlagung eine Scherbewegung ausführt, nahezu ausschließlich antisymmetrische Schwingungsmoden anregt. Um eine Scherbewegung in den Wellenleiter einzukoppeln, kann das piezoelektrische Element beispielsweise mit dem Wellenleiter 8 verklebt sein.

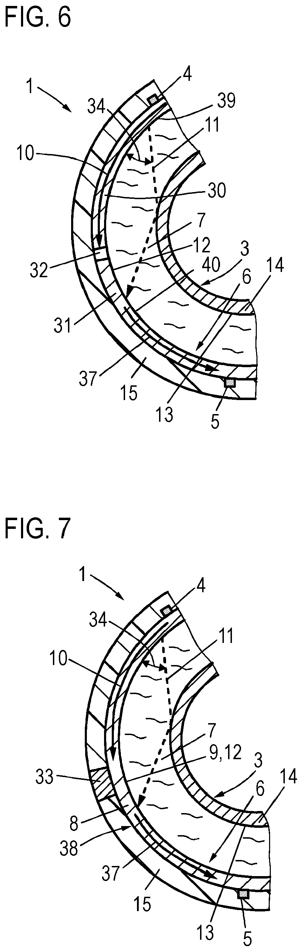

In einigen Anwendungsfällen kann es gewünscht sein, die in Fig. 3 gezeigten zusätzlichen Pulse 19, 20, also den Beitrag der direkt zwischen den Ultraschallwandlern 4, 5 geführten Welle 10 zu den Messdaten, zu unterdrücken. Eine erfindungsgemäße Möglichkeit hierfür ist in Fig. 6 dargestellt. Die Steuereinrichtung 2 und deren Verbindung mit den Ultraschallwandlern 4, 5 ist aus Übersichtlichkeitsgründen in Fig. 6 und den folgenden Figuren nicht dargestellt. Anstatt eines durchgehenden Wellenleiters 8, wie er in Fig. 1 dargestellt ist, werden stattdessen zwei separate Wellenleiter 30, 31 genutzt, wobei der erste Ultraschallwandler 4 ausschließlich mit dem Wellenleiter 30 und der zweite Ultraschallwandler 5 ausschließlich mit dem Wellenleiter 31 schwingungsgekoppelt ist. Die Kontaktflächen 39, 40 der Wellenleiter 30, 31 bilden jeweils einen Teilabschnitt des Innenflächenabschnitts 12. Die Lücke 32 zwischen den Wellenleitern 30, 31 kann durch ein dämpfendes Material aufgefüllt werden.

Eine weitere nicht erfindungsgemäße Möglichkeit zur Unterdrückung der direkten Führung der geführten Welle 10 vom ersten Ultraschallwandler 4 zum zweiten Ultraschallwandler 5 ist in Fig. 7 dargestellt. Hierbei wird in einem ungefähr mittig zwischen den Ultraschallwandlern 4, 5 liegenden Bereich statt dem üblichen Material 15 an der Außenseite 38 des Wellenleiters 8 ein anderes Material 33, beispielsweise ein sehr dichtes Material beziehungsweise ein Material mit hoher akustischer Impedanz, angeordnet, um die geführte Welle 10 in diesem Bereich durch Bedämpfung des Wellenleiters 8 zu unterdrücken.

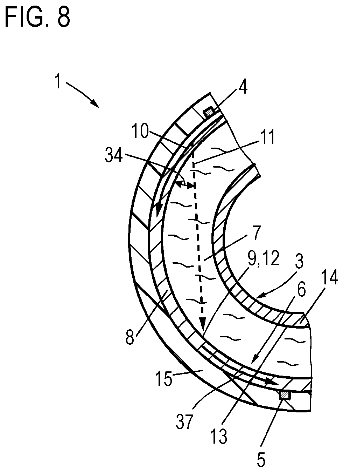

Die in den Figuren 1, 6 und 7 gezeigten Ausführungsbeispiele gehen von einer Reflektion der Druckwelle 11 an einer dem Wellenleiter 8 beziehungsweise dem Wellenleitern 30, 31 gegenüberliegenden Seitenwand 14 aus. Unter Umständen kann es jedoch vorteilhaft sein, eine solche Reflektion zu vermeiden, beispielsweise wenn die gegenüberliegende Wand nicht glatt ist, sondern komplexe Merkmale zur Strömungsformung aufweist oder Ähnliches. Wie in Figur 8 dargestellt ist, kann bei einer ausreichend starken Krümmung des Wellenleiters 8, einem ausreichenden Rohrdurchmesser und einem geeigneten Rayleigh-Winkel 34, der beispielsweise durch geeignete Wahl der genutzten Schwingungsmode und der genutzten Anregungsfrequenz eingestellt werden kann, erreicht werden, dass die angeregte Druckwelle 11 unmittelbar geradlinig durch das Fluid wieder zurück zur gleichen Seitenwand beziehungsweise zum gleichen Wellenleiter 8 übertragen wird. Das entsprechende Vorgehen lässt selbstverständlich auch auf den in Fig. 6 dargestellten erfindungsgemäßen Fall übertragen, wobei in diesem Fall unmittelbar eine Übertragung der Druckwelle zu dem Wellenleiter 31 erfolgt, an dem der empfangende Ultraschallwandler 5 angeordnet ist.

### Bezugszeichenliste

- 1: Messeinrichtung
- 2: Steuereinrichtung
- 3: Messrohr
- 4: Ultraschallwandler
- 5: Ultraschallwandler
- 6: Innenfläche
- 7: Strömungskanal
- 8: Wellenleiter
- 9: Kontaktfläche
- 10: Welle
- 11: Druckwelle
- 12: Innenflächenabschnitt
- 13: Innenflächenabschnitt
- 14: Seitenwand
- 15: Material
- 16: Messdaten
- 17: X-Achse
- 18: Y-Achse
- 19: Puls
- 20: Puls
- 21: Puls
- 22: Anregungsbereich
- 23: Anregungsbereich
- 24: Abstand
- 25: Stirnfläche
- 26: Schwingelement
- 27: Schwingelement
- 28: Seitenwand
- 29: Dichtelement
- 30: Wellenleiter
- 31: Wellenleiter
- 32: Lücke
- 33: Material
- 34: Rayleigh-Winkel
- 35: Innenflächenabschnitt
- 36: Innenflächenabschnitt
- 37: Welle
- 38: Außenseite
- 39: Kontaktfläche
- 40: Kontaktfläche
- 41: Tragabschnitt

## Patentansprüche

1. Messeinrichtung (1), insbesondere Durchflusszähler, zur Ermittlung einer ein Fluid und/oder eine Fluidströmung des Fluids betreffenden Fluidgröße, insbesondere eines Durchflussvolumens, mit einer Steuereinrichtung (2), einem Messrohr (3) und einem ersten und einem zweiten in Längsrichtung des Messrohrs (3) voneinander beabstandet an dem Messrohr (3) angeordneten Ultraschallwandler (4, 5), wobei eine Innenfläche (6) des Messrohrs (3) einen Strömungskanal (7) für das Fluid seitlich begrenzt, wobei der Strömungskanal (7) zwischen dem ersten und zweiten Ultraschallwandler (4, 5) in Längsrichtung des Messrohrs (3) gekrümmt ist, **dadurch gekennzeichnet, dass** die Ultraschallwandler (4, 5) jeweils mit einem Wellenleiter (30, 31) schwingungsgekoppelt sind, wobei eine Kontaktfläche (9) des jeweiligen Wellenleiters (30, 31) einen Abschnitt der Innenfläche (6) des Messrohrs (3) bildet, wobei die Steuereinrichtung (2) dazu eingerichtet ist, den ersten und/oder den zweiten Ultraschallwandler (4, 5) derart anzusteuern, dass er eine geführte Welle (10) derart anregt, dass sie sich in dem jeweiligen Wellenleiter (30, 31) parallel zu der Kontaktfläche (9, 39, 40) ausbreitet und hierbei eine Kompressionswelle (11) im Fluid anregt, die über das Fluid zu dem jeweils anderen der Ultraschallwandler (4, 5) geführt wird, um diesen zu Schwingungen anzuregen, wobei die Steuereinrichtung (2) dazu eingerichtet ist, die Schwingung des jeweils anderen der Ultraschallwandler (4, 5) betreffende Messdaten (16) zu erfassen und die Fluidgröße in Abhängigkeit dieser Messdaten (16) zu ermitteln, wobei der jeweilige Wellenleiter (30, 31) in Längsrichtung des Messrohrs (3) gekrümmt ist, womit ein gekrümmter Ausbreitungspfad der geführten Welle (10) resultiert.

2. Messeinrichtung nach Anspruch 1, **dadurch gekennzeichnet, dass** die Kontaktfläche (9, 39, 40) zumindest in einem Längsabschnitt des jeweiligen Wellenleiters eine Krümmung in Längsrichtung mit konstantem Krümmungsradius aufweist.

3. Messeinrichtung nach Anspruch 1 oder 2, **dadurch gekennzeichnet, dass** die Innenfläche (6) des Messrohrs (3) zumindest in einem sich zwischen dem ersten und zweiten Ultraschallwandler (4, 5) erstreckenden Längsabschnitt zwei parallele Innenflächenabschnitte (12, 13) aufweist, wobei die Kontaktfläche (9, 39, 40) des jeweiligen Wellenleiters (30, 31) einen dieser Innenflächenabschnitte (12) oder einen Teilabschnitt eines dieser Innenflächenabschnitte (12) bildet.

4. Messeinrichtung nach einem der vorangehenden Ansprüche, **dadurch gekennzeichnet, dass** die Innenfläche (6) des Messrohrs zumindest in dem oder einem sich zwischen dem ersten und zweiten Ultraschallwandler (4, 5) erstreckenden Längsabschnitt mehrere gewinkelt zueinander stehende Innenflächenabschnitte (12, 13, 35, 36) aufweist, wobei beide Ultraschallwandler (4, 5) unterschiedliche Wellenleiter (30, 31) kontaktieren, deren Kontaktflächen (39, 40) Teilflächen des gleichen Innenflächenabschnitts (12) sind, wobei der Innenflächenabschnitt (12) derart geformt ist und die Steuereinrichtung (2) dazu eingerichtet ist, den ersten und/oder zweiten Ultraschallwandler (4, 5) derart zur Anregung der geführten Welle anzusteuern, dass die durch den jeweiligen Ultraschallwandler (4, 5) angeregte geführte Welle (10) eine Kompressionswelle (11) anregt, die geradlinig durch das Fluid zurück zu dem gleichen Innenflächenabschnitt (12) geführt wird.

5. Messeinrichtung nach einem der vorangehenden Ansprüche, **dadurch gekennzeichnet, dass** der jeweilige Wellenleiter (30, 31) die Form einer in Längsrichtung gekrümmten Platte aufweist und/oder aus Metall besteht.

6. Messeinrichtung nach einem der vorangehenden Ansprüche, **dadurch gekennzeichnet, dass** der jeweilige Wellenleiter (30, 31) durch einen Metallstreifen gebildet ist, der, insbesondere formschlüssig, an einem aus einem anderen Material (15), insbesondere aus Kunststoff, gebildeten Tragabschnitt (41) des Messrohrs (3) gehaltert ist.

7. Messeinrichtung nach einem der vorangehenden Ansprüche, **dadurch gekennzeichnet, dass** der erste und/oder der zweite Ultraschallwandler (4, 5) jeweils dazu eingerichtet sind, in wenigstens zwei in Längsrichtung voneinander beabstandeten Anregungsbereichen (22, 23) des jeweiligen Wellenleiters (30, 31) eine jeweilige Teilwelle anzuregen, wobei sich die Teilwellen zu der geführten Welle (10) überlagern.

8. Messeinrichtung nach einem der Ansprüche 1 bis 6, **dadurch gekennzeichnet, dass** der erste und/oder zweite Ultraschallwandler (4, 5) mit einer jeweiligen Stirnfläche des jeweiligen Wellenleiters (30, 31) schwingungsgekoppelt sind, die in einem Winkel von wenigstens 60° oder von wenigstens 80° zu der jeweiligen Kontaktfläche (9) steht.

9. Messkapselzähler, umfassend ein Gehäuse mit einem einflussseitigen und einem ausflussseitigen Rohranschluss und einer Aufnahme für eine Messkapsel, **dadurch gekennzeichnet, dass** die Messeinrichtung nach einem der vorangehenden Ansprüche als Messkapsel in das Gehäuse eingesetzt, insbesondere eingeschraubt, ist.

## Claims

1. Measuring device (**1**), in particular flow meter, for determining a fluid variable relating to a fluid and/or a fluid flow of the fluid, in particular a flow volume, with a control device (**2**), a measuring tube (**3**) and a first and a second ultrasonic transducer (**4, 5**), arranged on the measuring tube (**3**) spaced apart from one another in the longitudinal direction of the measuring tube (**3**), wherein an inner surface (**6**) of the measuring tube (**3**) laterally delimits a flow channel (**7**) for the fluid, wherein the flow channel (**7**) between the first and second ultrasonic transducers (**4, 5**) is curved in the longitudinal direction of the measuring tube (3), **characterized in that** the ultrasonic transducers (**4**, **5**) are in each case vibrationally coupled to a waveguide (**30**, **31**), wherein a contact surface (**9**) of the respective waveguide (30, 31) forms a portion of the inner surface (6) of the measuring tube (3), wherein the control device (2) is set up to activate the first and/or the second ultrasonic transducer (4, 5) in such a way that it excites a guided wave (10) in such a way that the latter propagates parallel to the contact surface (9, 39, 40) in the respective waveguide (30, 31) and thereby excites a compression wave (11) in the fluid which is guided by way of the fluid to the other of the ultrasonic transducers (4, 5) respectively in order to excite it to vibrate, wherein the control device (2) is set up to acquire the measurement data (16) concerning the other of the ultrasonic transducers (4, 5) respectively and to determine the fluid variable in dependence on these measurement data (16), wherein the respective waveguide (30, 31) is curved in the longitudinal direction of the measuring tube (3), thereby resulting in a curved propagation path of the guided wave (10).

2. Measuring device according to Claim 1, **characterized in that**, at least in a longitudinal portion of the respective waveguide, the contact surface (9, 39, 40) has a curvature in the longitudinal direction with a constant radius of curvature.

3. Measuring device according to Claim 1 or 2, **characterized in that**, at least in a longitudinal portion extending between the first and second ultrasonic transducers (4, 5), the inner surface (6) of the measuring tube (3) has two parallel inner-surface portions (12, 13), wherein the contact surface (9, 39, 40) of the respective waveguide (30, 31) forms one of these inner-surface portions (12) or a subportion of one of these inner-surface portions (12).

4. Measuring device according to one of the preceding claims, **characterized in that**, at least in the or a longitudinal portion extending between the first and the second ultrasonic transducer (4, 5), the inner surface (6) of the measuring tube has a number of inner-surface portions (12, 13, 35, 36) angled in relation to one another, wherein the two ultrasonic transducers (4, 5) contact different waveguides (30, 31), the contact surfaces (39, 40) of which are subsurfaces of the same inner-surface portion (12), wherein the inner-surface portion (12) is shaped in such a way, and the control device (2) is set up for such a purpose, as to activate the first and/or second ultrasonic transducer (4, 5) to excite the guided wave in such a way that the guided wave (10) excited by the respective ultrasonic transducer (4, 5) excites a compression wave (11) which is guided in a straight line through the fluid back to the same inner-surface portion (12).

5. Measuring device according to one of the preceding claims, **characterized in that** the respective waveguide (30, 31) has the form of a plate that is curved in the longitudinal direction and/or consists of metal.

6. Measuring device according to one of the preceding claims, **characterized in that** the respective waveguide (30, 31) is formed by a metal strip, which is secured, in particular in an interlocking manner, on a supporting portion (41) of the measuring tube (3) that is formed from a different material (15), in particular from plastic.

7. Measuring device according to one of the preceding claims, **characterized in that** the first and/or the second ultrasonic transducer (4, 5) is respectively set up to excite a respective subwave in at least two excitation regions (22, 23) of the respective waveguide (30, 31) that are spaced apart from one another in the longitudinal direction, wherein the subwaves are overlaid on one another to form the guided wave (10).

8. Measuring device according to one of Claims 1 to 6, **characterized in that** the first and/or the second ultrasonic transducer (4, 5) is/are vibrationally coupled to the respective end face of the respective waveguide (30, 31), which is at an angle of at least 60° or of at least 80° to the respective contact surface (9).

9. Measuring capsule meter, comprising a housing with an inflow-side and an outflow-side tube connection and a mounting for a measuring capsule, **characterized in that** the measuring device according to one of the preceding claims is inserted as a measuring capsule in the housing, in particular is screwed in.

## Revendications

1. Dispositif de mesure (1), notamment débitmètre, pour déterminer une grandeur de fluide concernant un fluide et/ou un écoulement de fluide du fluide, notamment un volume de débit, avec un dispositif de commande (2), un tube de mesure (3) et un premier et un deuxième transducteur ultrasonore (4, 5) agencés sur le tube de mesure (3), espacés l'un de l'autre dans la direction longitudinale du tube de mesure (3), une surface intérieure (6) du tube de mesure (3) délimitant latéralement un canal d'écoulement (7) pour le fluide, le canal d'écoulement (7) entre le premier et le deuxième transducteur ultrasonore (4, 5) étant courbé dans la direction longitudinale du tube de mesure (3), **caractérisé en ce que** les transducteurs ultrasonores (4, 5) sont chacun couplés en vibration avec un guide d'ondes (30, 31), une surface de contact (9) du guide d'ondes respectif (30 ,31) formant une section de la surface intérieure (6) du tube de mesure (3), le dispositif de commande (2) étant adapté pour commander le premier et/ou le deuxième transducteur ultrasonore (4, 5) de telle sorte qu'il excite une onde guidée (10) de telle sorte qu'elle se propage dans le guide d'ondes respectif (30, 31) parallèlement à la surface de contact (9, 39, 40) et excite ainsi une onde de compression (11) dans le fluide, qui est guidée via le fluide vers l'autre transducteur ultrasonore respectif (4, 5), pour exciter celui-ci en vibrations, le dispositif de commande (2) étant adapté pour détecter des données de mesure (16) concernant la vibration de l'autre transducteur ultrasonore respectif (4, 5) et pour déterminer la grandeur de fluide en fonction de ces données de mesure (16), le guide d'ondes respectif (30, 31) étant courbé dans la direction longitudinale du tube de mesure (3), moyennant quoi un chemin de propagation courbé de l'onde guidée (10) est obtenu.

2. Dispositif de mesure selon la revendication 1, **caractérisé en ce que** la surface de contact (9, 39, 40) présente, au moins dans une section longitudinale du guide d'ondes respectif, une courbure dans la direction longitudinale avec un rayon de courbure constant.

3. Dispositif de mesure selon la revendication 1 ou 2, **caractérisé en ce que** la surface intérieure (6) du tube de mesure (3) présente, au moins dans une section longitudinale s'étendant entre le premier et le deuxième transducteur ultrasonore (4, 5), deux sections de surface intérieure parallèles (12, 13), la surface de contact (9, 39, 40) du guide d'ondes respectif (30, 31) formant une de ces sections de surface intérieure (12) ou une section partielle d'une de ces sections de surface intérieure (12) .

4. Dispositif de mesure selon l'une quelconque des revendications précédentes, **caractérisé en ce que** la surface intérieure (6) du tube de mesure présente, au moins dans la ou une section longitudinale s'étendant entre le premier et le deuxième transducteur ultrasonore (4, 5), plusieurs sections de surface intérieure (12, 13, 35, 36) formant un angle entre elles, les deux transducteurs ultrasonores (4, 5) étant en contact avec des guides d'ondes différents (30, 31) dont les surfaces de contact (39, 40) sont des surfaces partielles de la même section de surface intérieure (12), la section de surface intérieure (12) étant formée de manière à et le dispositif de commande (2) étant adapté pour commander le premier et/ou le deuxième transducteur ultrasonore (4, 5) pour exciter l'onde guidée de telle sorte que l'onde guidée (10) excitée par le transducteur ultrasonore respectif (4, 5) excite une onde de compression (11) qui est guidée en ligne droite à travers le fluide en retour vers la même section de surface intérieure (12).

5. Dispositif de mesure selon l'une quelconque des revendications précédentes, **caractérisé en ce que** le guide d'ondes respectif (30, 31) présente la forme d'une plaque courbée dans la direction longitudinale et/ou est constitué de métal.

6. Dispositif de mesure selon l'une quelconque des revendications précédentes, **caractérisé en ce que** le guide d'ondes respectif (30, 31) est formé par une bande métallique qui est maintenue, notamment par complémentarité de forme, sur une section porteuse (41) du tube de mesure (3) formée d'un autre matériau (15), notamment de matière plastique.

7. Dispositif de mesure selon l'une quelconque des revendications précédentes, **caractérisé en ce que** le premier et/ou le deuxième transducteur ultrasonores (4, 5) sont respectivement adaptés pour exciter une onde partielle respective dans au moins deux zones d'excitation (22, 23) du guide d'ondes respectif (30, 31) espacées l'une de l'autre dans la direction longitudinale, les ondes partielles se superposant pour former l'onde guidée (10).

8. Dispositif de mesure selon l'une quelconque des revendications 1 à 6, **caractérisé en ce que** le premier et/ou le deuxième transducteur ultrasonore (4, 5) sont couplés en vibration avec une surface frontale respective du guide d'ondes respectif (30, 31), qui forme un angle d'au moins 60° ou d'au moins 80° avec la surface de contact respective (9).

9. Compteur à capsule de mesure, comprenant un boîtier avec un raccordement de tube du côté de l'entrée et du côté de la sortie et un logement pour une capsule de mesure, **caractérisé en ce que** le dispositif de mesure selon l'une quelconque des revendications précédentes est inséré, notamment vissé, dans le boîtier en tant que capsule de mesure.
